# EUROPEAN PATENT SPECIFICATION

(11) **EP 1 444 934 B1**
(45) Date of publication and mention of the grant of the patent: **28.12.2005**
(21) Application number: 03256977.4
(22) Date of filing: 05.11.2003
(51) Int. Cl.: A47J 37/06, A47J 37/07

(54) **Grill unit and cooking apparatus with the same**
Grilleinheit und Kochvorrichtung mit derselben
Unité de gril et appareil de cuisson en étant équipé

(30) Priority: 06.02.2003 KR 2003007560
(43) Date of publication of application: 11.08.2004
(73) Proprietor: SAMSUNG ELECTRONICS CO., LTD., Suwon-city, Kyungki-do (KR)
(72) Inventor: Han, Dae-Sung, Taen-Eub Hwasung- City, Kyungki-do (KR); Kim, Chul, Yongin-City, Kyungki-Do (KR); Han, Yong-Woon, Kunpo-City, Kyungki-Do (KR); Jang, Seong-Deog, Suwon-City, Kyungki-Do (KR); Hahm, Kyung-Hee, Youngdungpo-Gu, Seoul (KR); Yeo, Joo-Yeong, Taean-Eub, Hwasung-City, Kyungki-Do (KR); Kang, Han-Seong, Paldal-Gu, Suwon-City, Kyungki-do (KR)
(74) Representative: Robinson, Ian Michael

(56) References cited:
- GB-A- 2 286 111
- US-A- 3 154 004
- US-A- 4 632 089
- US-A- 5 189 945
- US-A- 6 158 426
- US-B1- 6 431 164

## Description

The present invention relates, in general, to a grill unit and cooking apparatus with the same and, more particularly, to a grill unit and cooking apparatus with the same, which prevents grill pipes from overheating and improves cooking efficiency.

Generally, it is well known that meat or processed meat, such as sausage, is most delicious when grilled. Therefore, persons enjoy cooking meat or processed meat using a cooking apparatus with a grill unit and eating the cooked meat or processed meat.

The cooking apparatus for this kind of cooking includes a heating unit for directly applying heat to food, and a grill unit mounted on top of the heating unit to support food while spacing the food apart from the heating unit. This structure allows food put on the grill unit to be heated by heat transferred from the heating unit. However, when cooking is performed using the cooking apparatus equipped with a grill unit, high temperature heat is directly transferred from the heating unit to the grill unit, so the part of food in contact with the grill unit easily burns, thus deteriorating the taste of the food and negatively affecting the health of those eating the burned food. Also, water contained in the grill pipes of the grill unit is easily heated by the heating unit, and noise is generated when water vapor generated in the grill pipes is discharged to water tanks of the grill unit.

Document US-5189945 discloses the preamble of claim 1.

Other aims and/or advantages of the invention will be set forth in part in the description that follows and, in part, will be obvious from the description, or may be learned by practice of the invention.

Although a few preferred embodiments have been shown and described, it will be appreciated by those skilled in the art that various changes and modifications might be made without departing from the scope of the invention, as defined in the appended claims.

The present invention provides a grill unit and cooking apparatus with the same, in which a width of each of the grill pipes is sufficiently narrow so that heat may be easily transferred to food from a heating unit arranged below the grill pipes, and the amount of water contained in the grill pipes is sufficiently maintained to prevent the grill pipes from overheating.

In one aspect of the present invention, there is provided a grill unit including a plurality of grill pipes; and water tanks respectively connected to ends of the grill pipes to supply water into the grill pipes, wherein a height of a cross-section of each of the grill pipes is greater than a width thereof.

The height of the cross-section of each of the grill pipes is about 1.2 to about 2.0 times the width thereof. The distance between neighboring grill pipes is about 3.0 to about 6.0 times the width of the cross-section of each of the grill pipes.

In another aspect of the present invention there is provided a cooking apparatus, including a cabinet having at least one heater; and a grill unit mounted on a top surface of the cabinet to support food, the grill unit including a plurality of grill pipes, and water tanks respectively connected to ends of the grill pipes to supply water into the grill pipes, wherein a height of a cross-section of each of the grill pipes is greater than a width thereof to circulate the water in the grill pipes while preventing the water from overheating, thereby reducing an amount of water vapor formed in the grill pipes and reducing noise generated as the water vapor is discharged to the water tanks.

These, together with other aspects and/or advantages that will be subsequently apparent, reside in the details of construction and operation as more fully hereinafter described and claimed, reference being had to the accompanying drawings forming a part thereof, wherein like numerals refer to like parts throughout.

For a better understanding of the invention, and to show how embodiments of the same may be carried into effect, reference will now be made, by way of example, to the accompanying diagrammatic drawings in which:
Figure 1 is an exploded perspective view of a cooking apparatus with a grill unit, according to an embodiment of the present invention;
Figure 2 is a sectional view showing the construction of the grill unit of the present invention;
Figure 3 is a perspective view showing the construction and arrangement of grill pipes of the grill unit of the present invention; and
Figure 4 is a detailed perspective view showing the construction of the grill pipes of the grill unit of the present invention.

Hereinafter, an embodiment of the present invention will be described in detail with reference to the attached drawings, wherein the like reference numerals refer to the like elements throughout. The present invention may, however, be embodied in many different forms and should not be construed as being limited to the embodiment set forth herein; rather, this embodiment is provided so that the present disclosure will be thorough and complete, and will fully convey the concept of the invention to those skilled in the art.

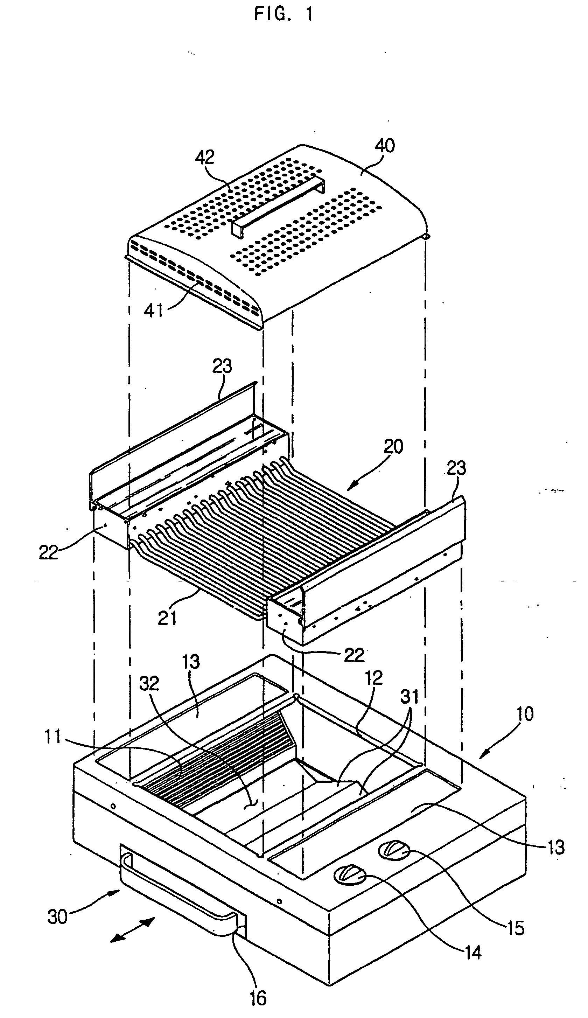

As shown in Figure 1, a cooking apparatus with a grill unit according to the preferred embodiment of the present invention includes a cabinet 10 formed in a box shape, and a grill unit 20 mounted on a top of the cabinet 10 to grill food put on the grill unit 20. Further, the cooking apparatus includes a plurality of heaters 11 mounted in the cabinet 10 to heat food put on the grill unit 20, a heat reflecting member 30 that guides the heat from the heaters 11 to the food on the grill unit 20 and collects oil dripping from the food, and a cover member 40 that covers the upper portion of the grill unit 20 and has a plurality of holes 41 and 42 perforated therethrough.

The cabinet 10 has an opening 12 formed in the top thereof to allow heat generated by the heaters 11 mounted in the cabinet 10 to be transferred to the grill unit 20. Grill seats 13, each with a predetermined area, are formed on both sides of the top surface of the cabinet 10 around the opening 12 to allow the grill unit 20 to be seated thereon. Further, a timer switch 14 and a power switch 15 are provided at a certain portion of a top surface of the cabinet 10 to control the heating time and the heating temperature of the heaters 11, respectively. An opening 16 is formed in a lower portion of the front of the cabinet 10 so that the heat reflecting member 30 may be moved into and out of the cabinet 10 through the opening 16, similar to the operation of a drawer.

The heaters 11 are set within both sides of the cabinet 10, that is, below the grill seats 13, to heat food put on the grill unit 20, and are inclined at a predetermined angle such that heating surfaces of the heaters 11 face the opening 12 formed in the top of the cabinet 10. The heaters 11 each include a ceramic member in which heating elements are encapsulated to generate infrared rays with a high temperature. However, the heaters 11 may be implemented as gas heaters using gas, or as trays for holding charcoal.

The heat reflecting member 30 is constructed such that its axial center portion is projected upward to form a hill shape with a triangular cross-section, and both projected surfaces form reflecting surfaces 31 to allow heat generated by the heaters 11 to be reflected to the grill unit 20 arranged above the heaters 11. Further, recesses 32 are formed at bottoms of both projected surfaces to collect oil dripping from food put on the grill unit 20. Further, although not shown in Figure 1, a predetermined amount of water is contained in the heat reflecting member 30 to prevent the temperatures of the recesses 32 and the reflecting surfaces 31 from increasing excessively, thus preventing oil collected in the recesses 32 from burning or adhering to the recesses 32.

The grill unit 20 includes a plurality of grill pipes 21 arranged in parallel with each other while being spaced apart from each other, water tanks 22 connected to both ends of the grill pipes 21 to supply water into the grill pipes 21 and provided with bottom surfaces seated on the grill seats 13 of the top surface of the cabinet 10, and covers 23 to selectively open and close upper portions of the water tanks 22.

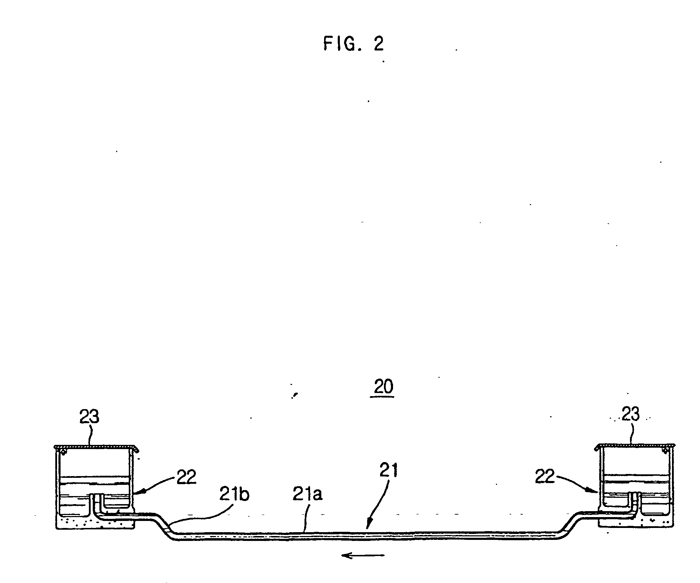

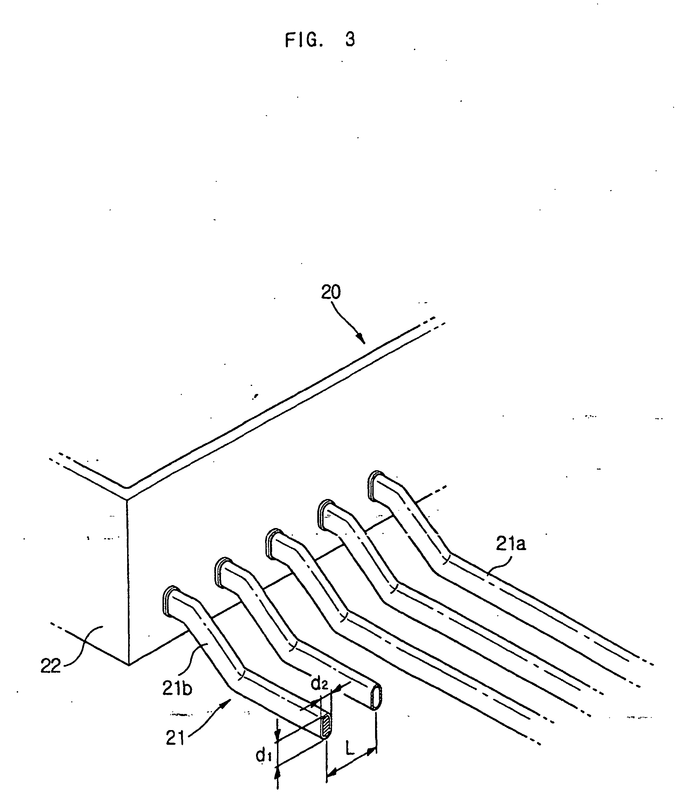

As shown in Figures 2 and 3, each of the grill pipes 21 has a horizontally extended part 21a on which food is placed. The horizontally extended part 21a is bent to be positioned lower than both ends of each of the grill pipes 21 connected to the water tanks 22 so that the food is positioned near the heaters 11 arranged below the food. That is, each of the grill pipes 21 has two inclined parts 21b downwardly bent at a predetermined angle and extended from end parts connected to the water tanks 22. Each of the grill pipes 21 is bent to be horizontally extended between the inclined parts 21b, so that the horizontally extended part 21a on which the food is placed is lower than the water tanks 20.

The above-described construction of the grill unit 20 prevents the grill pipes 21 from overheating by allowing water to flow into the grill pipes 21 from the water tanks 22, even though the grill pipes 21 are heated by heat transferred from the heaters 11 arranged below the grill unit 20 when the user grills food, thereby preventing the part of food in contact with the grill pipes 21 from burning.

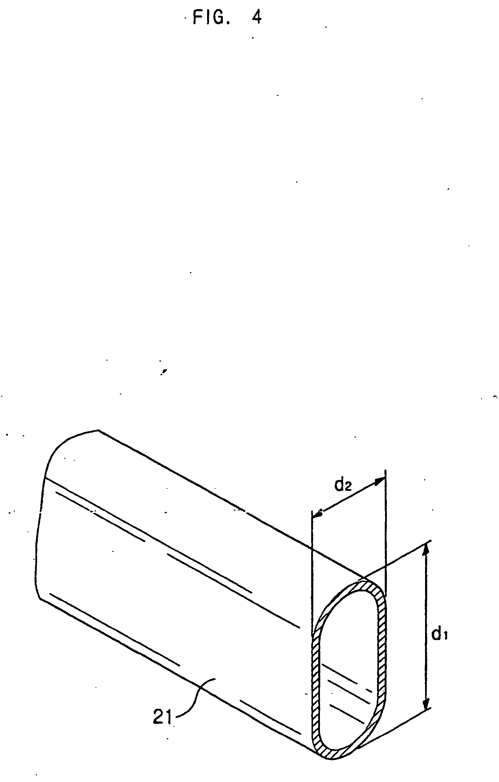

As shown in Figures 3 and 4, the grill pipes 21 of the grill unit 20 of the present invention are formed such that a height d1 of a cross-section of each grill pipe 21 is greater than a width d2 thereof. That is, the cross-section of each grill pipe 21 has an oval shape with a height greater than a width thereof.

The width d2 of each of the grill pipes 21 sufficiently narrow is so that heat may be easily transferred to food put on the grill pipes 21 from the heaters 11 positioned below the grill pipes 21, and heat loss due to interception of the heat by the grill pipes 21 is minimized, thus improving cooking efficiency.

As the width d2 of each of the grill pipes 21 is decreased, the height d1 of each of the grill pipes 21 is increased to allow a suitable amount of water to fill the grill pipes 21, thus smoothly circulating water contained in the grill pipes 21 while preventing the water from overheating for a short period of time. In this way, the amount of water vapor generated in the grill pipes 21 is reduced, so noise generated when the water vapor is discharged to the water tanks is also reduced.

As an example, the height d1 of the cross-section of each grill pipe 21 is set at about 1.2 to about 2.0 times the width d2 thereof. For example, to grill fresh meat or processed meat, the height of each grill pipe 21 may be approximately 5 mm to approximately 8 mm for a width of about 4 mm.

Further, to easily transfer heat to food placed on the grill pipes 21 from the heaters 11, in one example, a distance L between neighboring grill pipes 21 is set to about 3 to about 6 times the width d2 of each grill pipe 21. For example, if the width d2 of each grill pipe 21 is approximately 4 mm, the distance L between neighboring grill pipes 21 is approximately 12 mm to approximately 24 mm.

As is apparent from the above description, the present invention provides a grill unit and a cooking apparatus with the same, in which a height of a cross-section of each grill pipe is greater than a width thereof, so that heat generated from heaters arranged below the grill pipes may be easily transferred to food placed on the grill pipes, thus improving cooking efficiency. Further, the present invention is advantageous in that, because the height of the cross-section of each grill pipe is relatively large, the amount of water received in the grill pipes is increased compared to conventional grill pipes having equal widths and heights, thus preventing the grill pipes from rapidly overheating and also preventing noise due to water vapor from being generated.

Although a few preferred embodiments have been shown and described, it will be appreciated by those skilled in the art that various changes and modifications might be made without departing from the scope of the invention, as defined in the appended claims.

## Claims

1. A grill unit, comprising:
a plurality of grill pipes (21); and
water tanks (22) respectively connected to ends of the grill pipes (21) to supply water into the grill pipes (21) ;
**characterised in that**
a height of a cross-section of each of the grill pipes (21) is greater than a width thereof.

2. The grill unit (20) according to claim 1, wherein the height of the cross-section of each of the grill pipes (21) is about 1.2 to about 2.0 times the width thereof.

3. The grill unit (20) according to claim 1 or 2, wherein a distance between neighboring grill pipes (21) is about 3.0 to about 6.0 times the width of the cross-section of each of the grill pipes (21).

4. The grill unit (20) according to claim 1, 2 or 3, wherein the width of the cross-section of each of the grill pipes (21) is about 4 mm and the distance between neighboring grill pipes (21) is about 12 mm to about 24 mm.

5. The grill unit (20) according to any preceding claim, wherein the cross-section of each of the grill pipes (21) has an oval shape with a height of the oval being greater than a width thereof.

6. The grill unit (20) according to any preceding claim, wherein the height of the cross-section of each of the grill pipes (21) is about 5 mm to about 8 mm and the width of the cross-section of each of the grill pipes (21) is about 4 mm.

7. A cooking apparatus, comprising:
a cabinet (10) having at least one heater (11); and
a grill unit (20) mounted on a top surface of the cabinet (10) to support food, the grill unit (20) comprising:
a plurality of grill pipes (21); and
water tanks (22) respectively connected to ends of the grill pipes (21) to supply water into the grill pipes (21) ;
**characterised in that** a height of a cross-section of each of the grill pipes (21) is greater than a width thereof to circulate the water in the grill pipes (21).

8. The cooking apparatus according to claim 7, wherein the height of the cross-section of each of the grill pipes (21) is about 1.2 to about 2.0 times the width thereof.

9. The cooking apparatus according to claim 7 or 8, wherein a distance between neighboring grill pipes (21) is about 3.0 to about 6.0 times the width of the cross-section of each of the grill pipes (21).

10. The grill unit or the cooking apparatus according to any preceding claim, wherein each end of each grill pipe (21) comprises:
a laterally extended part (21a); and
an upwardly extended part (21b) that is upwardly bent and extended from the laterally extended part (21a) and open at a top thereof to interface with an inside of a corresponding one of the water tanks (22) to reinforce the rigidity of portions of each grill pipe connected to the corresponding water tank.

11. The grill unit or the cooking apparatus according to claim 10, wherein each grill pipe comprises:
inclined parts (21b) at respective ends of each grill pipe, each inclined part being downwardly bent at a predetermined angle and extended from respective laterally extended parts (21a); and
a horizontally extended part (21a) on which food is placed, sides of which extending from respective inclined parts, the horizontally extended part being positioned lower than the respective water tanks (22) to place the food near the at least one heater (11).

## Patentansprüche

1. Grilleinheit mit:
einer Vielzahl von Grillrohren (21); und
Wasserbehältern (22), die jeweils mit Enden der Grillrohre (21) verbunden sind, um Wasser in die Grillrohre (21) zu liefern;
**dadurch gekennzeichnet, dass** die Höhe eines Querschnitts von jedem der Grillrohre (21) größer ist als dessen Breite.

2. Grilleinheit (20) nach Anspruch 1, wobei die Höhe des Querschnitts von jedem der Grillrohre (21) etwa 1,2 bis etwa 2,0 mal dessen Breite ist.

3. Grilleinheit (20) nach Anspruch 1 oder 2, wobei ein Abstand zwischen benachbarten Grillrohren (21) etwa 3,0 bis etwa 6,0 mal der Breite des Querschnitts von jedem der Grillrohre (21) entspricht.

4. Grilleinheit (20) nach Anspruch 1, 2 oder 3, wobei die Breite des Querschnitts von jedem der Grillrohre (21) etwa 4 mm beträgt und der Abstand zwischen benachbarten Grillrohren (21) etwa 12 mm bis etwa 24 mm beträgt.

5. Grilleinheit (20) nach einem vorhergehenden Anspruch, wobei der Querschnitt von jedem der Grillrohre (21) eine ovale Form aufweist, wobei die Höhe des Ovals größer ist als dessen Breite.

6. Grilleinheit (20) nach einem vorhergehenden Anspruch, wobei die Höhe des Querschnitts von jedem der Grillrohre (21) etwa 5 mm bis etwa 8 mm beträgt und die Breite des Querschnitts von jedem der Grillrohre (21) etwa 4 mm beträgt.

7. Kochvorrichtung mit:
einem Gehäuse (10) mit mindestens einer Heizvorrichtung (11); und
einer Grilleinheit (20), die an einer oberen Oberfläche des Gehäuses (10) montiert ist, um Nahrungsmittel abzustützen, wobei die Grilleinheit (20) umfasst:
eine Vielzahl von Grillrohren (21); und
Wasserbehälter (22), die jeweils mit Enden der Grillrohre (21) verbunden sind, um Wasser in die Grillrohre (21) zu liefern;
**dadurch gekennzeichnet, dass** die Höhe eines Querschnitts von jedem der Grillrohre (21) größer ist als dessen Breite, um das Wasser in den Grillrohren (21) zirkulieren zu lassen.

8. Kochvorrichtung nach Anspruch 7, wobei die Höhe des Querschnitts von jedem der Grillrohre (21) etwa 1,2 bis etwa 2,0 mal dessen Breite ist.

9. Kochvorrichtung nach Anspruch 7 oder 8, wobei ein Abstand zwischen benachbarten Grillrohren (21) etwa 3,0 bis etwa 6,0 mal die Breite des Querschnitts von jedem der Grillrohre (21) ist.

10. Grilleinheit oder Kochvorrichtung nach einem vorhergehenden Anspruch, wobei jedes Ende von jedem Grillrohr (21) umfasst:
einen sich seitlich erstreckenden Teil (21a); und
einen sich nach oben erstreckenden Teil (21b), der nach oben gebogen ist und sich vom sich seitlich erstreckenden Teil (21a) erstreckt und an einer Oberseite desselben offen ist, um mit einem Inneren eines entsprechenden der Wasserbehälter (22) zu koppeln, um die Steifigkeit von Teilen von jedem Grillrohr, die mit dem entsprechenden Wasserbehälter verbunden sind, zu verstärken.

11. Grilleinheit oder Kochvorrichtung nach Anspruch 10, wobei jedes Grillrohr umfasst:
geneigte Teile (21b) an jeweiligen Enden von jedem Grillrohr, wobei jeder geneigte Teil in einem vorbestimmten Winkel nach unten gebogen ist und sich von jeweiligen sich seitlich erstreckenden Teilen (21a) erstreckt; und
einen sich horizontal erstreckenden Teil (21a), auf den Nahrungsmittel gelegt werden, wobei sich dessen Seiten von den jeweiligen geneigten Teilen erstrecken, wobei der sich horizontal erstreckende Teil niedriger angeordnet ist als die jeweiligen Wasserbehälter (22), um die Nahrungsmittel nahe der mindestens einen Heizvorrichtung (11) anzuordnen.

## Revendications

1. Unité de gril, comprenant :
- une pluralité de tubes de gril (21) ; et
- des réservoirs d'eau (22) reliés respectivement aux extrémités des tubes de gril (21) pour alimenter les tubes de gril (21) en eau ;
**caractérisée en ce que** la hauteur en section transversale de chacun des tubes de gril (21) est supérieure à leur largeur.

2. Unité de gril (20) selon la revendication 1, dans laquelle la hauteur en section transversale de chacun des tubes de gril (21) est égale à environ 1,2 à 2 fois leur largeur.

3. Unité de gril (20) selon la revendication 1 ou 2, dans laquelle la distance entre les tubes de gril (21) voisins est égale à environ 3 à 6 fois la largeur de la section transversale de chacun des tube de gril (21).

4. Unité de gril (20) selon la revendication 1, 2 ou 3, dans laquelle la largeur de la section transversale de chacun des tubes de gril (21) est d'environ 4 mm et la distance entre les tubes de gril (21) voisins est d'environ 12 à environ 24 mm.

5. Unité de gril (20) selon l'une quelconque des revendications précédentes, dans laquelle la section transversale de chacun des tubes de gril (21) a une forme ovale, la hauteur de l'ovale étant supérieure à sa largeur.

6. Unité de gril (20) selon l'une quelconque des revendications précédentes, dans laquelle la hauteur de la section transversale de chacun des tubes de gril (21) est d'environ 5 à environ 8 mm et la largeur de la section transversale de chacun des tubes de gril (21) est d'environ 4 mm.

7. Appareil de cuisson, comprenant :
- un boîtier (10) avec au moins un organe de chauffage (11) ; et
- une unité de gril (20) montée sur la surface supérieure du boîtier (10) pour supporter des aliments, l'unité de gril (20) comprenant :
- une pluralité de tubes de gril (21) ; et
- des réservoirs d'eau (22) reliés respectivement aux extrémités des tubes de gril (21) pour alimenter les tubes de gril (21) en eau ;
**caractérisée en ce que** la hauteur d'une section transversale de chacun des tubes de gril (21) est supérieure à leur largeur pour permettre à l'eau de circuler dans les tubes de gril (21).

8. Appareil de cuisson selon la revendication 7, dans lequel la hauteur de la section transversale de chacun des tubes de gril (21) est égale à environ 1,2 à 2 fois la largeur de cette section transversale.

9. Appareil de cuisson selon la revendication 7 ou 8, dans laquelle la distance entre les tubes de gril (21) voisins est égale à environ 3 à 6 fois la largeur de la section transversale de chacun des tubes de gril (21).

10. Unité de gril ou appareil de cuisson selon l'une quelconque des revendications précédentes, dans lesquels chaque extrémité de chacun des tubes de gril (21) comprend :
- une partie (21a) s'étendant latéralement ; et
- une partie (21b) s'étendant vers le haut qui est courbée vers le haut et qui s'étend à partir de la partie (21a) s'étendant latéralement et est ouverte à son sommet pour se connecter avec l'intérieur du réservoir d'eau correspondant (22) afin de renforcer la rigidité des parties de chaque tube de gril relié au réservoir d'eau correspondant.

11. Unité de gril ou appareil de cuisson selon la revendication 10, dans lequel chaque tube de gril comprend :
- des parties inclinées (21b) aux extrémités respectives de chaque tube de gril, chaque partie inclinée étant courbée vers le bas à un angle prédéterminé et s'étendant depuis les parties respectives (21a) s'étendant latéralement ; et
- une partie (21a) s'étendant horizontalement sur laquelle des aliments sont placés, dont les côtés s'étendent depuis les parties inclinées respectives, la partie s'étendant horizontalement étant positionnée plus bas que les réservoirs d'eau respectifs (22) afin de placer les aliments à proximité du au moins un organe de chauffage (11).
